# EUROPEAN PATENT SPECIFICATION

(11) **EP 2 547 208 B1**
(45) Date of publication and mention of the grant of the patent: **27.07.2016**
(21) Application number: 11756981.4
(22) Date of filing: 17.03.2011
(51) Int. Cl.: A01N 47/12, A01N 25/12

(54) **BIOCIDE POWDER FORMULATION**
FORMULIERUNG MIT BIOZIDLEISTUNG
POUDRE BIOCIDE

(30) Priority: 17.03.2010 US 314708 P
(43) Date of publication of application: 23.01.2013
(73) Proprietor: Troy Technology II, Inc., Florham Park, New Jersey 07932 (US)
(72) Inventor: WILLEM, Anker, 25474 Ellerbek (DE)
(74) Representative: Bülle, Jan
(86) International application number: PCT/US2011/028782
(87) International publication number: WO 2011/116168

(56) References cited:
- US-A1- 2004 109 897
- US-A1- 2005 049 224
- US-A1- 2006 029 649
- US-A1- 2006 229 381
- US-A1- 2006 229 381

## Description

### TECHNICAL FIELD

The present invention relates to a free flowing powder concentrate of biocides, particularly of IPBC, and their incorporation into various compositions useful in varied industrial processes requiring antimicrobial protection. More specifically, the present invention provides a biocide concentrate comprising a biocide containing an iodopropynyl group and an inert filler, wherein the wt. % ratio of biocide: inert filler is from about 1:1 to about 1:100 and the wt. % of biocide is not more than 50%.

The free flowing powder concentrates of biocides of the present invention are easy to handle due to their non-sticky and non-clinging feature and are also storage stable due to minimal moisture content.

The powder concentrates of the present invention are suitable for use in paint, building materials, stucco, concrete, caulks, sealants, joint compounds, adhesives, leather, wood, inks, pigment dispersions, metal working fluids, drilling mud and/or clay slurries done to their anti-biocidal/antimicrobial action.

### BACKGROUND

Most of the industrial biocide formulations used today are formulated with organic solvents that are volatile organic compounds (VOCs). For example, organic solvents such as petroleum distillates, dimethyl sulfoxide (DMSO), glycol ethers, N-methyl pyrrolidone (NMP), and propylene glycol (PG), are commonly used to prepare commercially-available biocide formulations used in the treatment and preservation of paints and coatings, wood, masonry and other industrial applications. These volatile organic compounds contribute to environmental concerns when released into the environment and their use in paints and coatings, in particular, is becoming less desirable.

One of the approaches to address this problem has been to develop aqueous dispersions of poorly soluble biocides, and/or solutions of biocides in low-VOC solvents, e.g., polyethyleneglycol (PEG) and PEG/water. Aqueous dispersions of biocides, however, often suffer from stability problems, and it is also often difficult to effectively and uniformly disperse the biocide in the matrix undergoing treatment. PEG-based biocide solutions provide reduced VOCs, but have higher viscosities which are disadvantageous for handling by the end-user. PEG-based formulations are also limited in terms of active biocide concentration due to the higher viscosity caused by the PEG.

One common biocide is 3-iodo-2-propynyl butyl carbamate (IPBC), IPBC is a well known preservative/antibacterial for use in cosmetic, paint and coating formulations; it can be added readily to such formulations at room temperature. However, IPBC is further associated with a difficulty in its handling in its various industrial applications, because it tends to be clumpy and sticky. More particularly, it cannot be fed easily from blending equipment and automatic feeding devices. Moreover, it is necessary to physically break up clumps of IPBC to provide a good dispersion of the material when processing it into various polymer based industrial applications. Even if chunks of IPBC are pulverized the powders reclump quickly into an undesired form for handling in industrial production of plastic and polymer products. Other biocides are fine and sticky powders, that, upon mixing with other ingredients, cling to the walls of the mixing vessel; accordingly, it is difficult to predetermine their use levels, and it also creates a hazardous clean-up situation.

U.S. Patent Application 20060229381 by ISP INVESTMENTS INC. discloses a matrix which is a polymer, plastic or polymer-wood composite including a composition of a biocide and a processing additive therewith in the form of a free-flowing powder.

U.S. Patent Application 20090258916 by ROHM AND HAAS COMPANY discloses a stable low-melting biocidal composition, and a stable aqueous dispersion of a low-melting, solid biocide. A stable low-melting mixture containing DCOIT and IPBC is disclosed.
US2004/0109897 describes a free flowing solid antimicrobial composition. US2006/0029649 relates to stabilized antimicrobial agents. US2005/0049224 discloses antimicrobial mixtures comprising iodopropynyl compounds and dimethyldithiocarbamate derivatives.

Still, there exists a need, therefore, for biocides particularly for IPBC, that are easy to handle and are free from agglomeration and clump formation.

For these reasons, it is an object of this invention to provide a composition containing a biocide, e.g., IPBC, 3-iodopropynyl carbamate (IPC), or 3-iodopropynyl-N-phenyl carbamate (IPPC), and an inert filler, in the form of a storage stable free-flowing powder concentrate.

Further, the powder concentrate of the present invention does not cause feeding problems, and remains free flowing after packaging and storage.

Another advantage of the present invention is the powder concentrate described herein has processing stability at high temperature and alkaline conditions, and exhibits stability in wet storage conditions.

These and other objects and features of the invention will be made apparent from the following description.

### SUMMARY

We have discovered solid free flowing powder concentrates of IPBC, which can be used for various industrial purposes. Such free flowing powder concentrates of biocides are not only easy to handle due to their non-sticky and non-clinging feature but are also storage stable due to minimal moisture content.

In accordance with the present invention, there is provided a storage stable free flowing powder concentrate for use in manufacture of biocide formulations comprising a biocide containing an iodopropynyl group and an inert filler.

More specifically, the present invention provides a biocide powder concnetrate comprising a biocide containing an iodopropynyl group and an inert filler, wherein the wt % ratio of biocide: inert filler is from about 1:1 to about 1:100 and the wt % of biocide is not more than 50%, wherein said inert filler is a combination of calcium carbonate and silica in wt.% ratio of from about 3:2 to about 15:1.

The biocide containing an iodopropynyl group preferably is selected from iodopropynyl butyl carbamate (IPBC), 3-iodopropynyl carbamate and 3-iodopropynyl-N-phenyl carbamate.

In a preferred embodiment, the biocide is IPBC.

In one embodiment of the present invention, the maximum particle size of finely divided particles of biocide and the inert carrier is ≤250 µm; and more preferably it is ≤200 µm.

The amount of biocide in the powder concentrate is in the range of about 1 to about 50 wt.% of the total composition; and more preferably in the range of about 10 to 25 wt.%. The amount of inert filler is in the range of about 35 to about 99 wt.%.

The free flowing powder concentrate in a preferred embodiment is formulated in the form of a tablet, powder, flake, particle, or sachet.

In yet another embodiment, the present invention provides a powder concentrate having processing stability at high temperature and alkaline conditions, and exhibiting stability in wet storage conditions.

The storage stable free flowing powder concentrate can be employed in the field of paints, building materials, stucco, concrete, caulks, sealants, joint compounds, adhesives, leather, wood, inks, pigment dispersions, metal working fluids, drilling mud and/or clay slurries, latexes, coatings, mineral slurries, cosmetics, household or personal care formulations, pulp and paper mill samples, wood, leather, and industrial water treatment.

These and other objectives will more readily become apparent from the description and examples which follows.

### DETAILED DESCRIPTION

The invention provides a concentrate formulation for a biocide in an inert carrier. The present concentrate overcomes the shortcomings of prior art systems by providing IPBC concentrates in the form of storage stable free flowing powder concentrate. The composition is stable with regard to agglomeration and crystallization at room temperature.

The biocide formulations of the invention are advantageous in protecting against microbial growth in a variety of industrial applications, and particularly those utilizing high processing temperatures (approx. 80°C and high) and alkaline conditions. Further, these powders exhibit stability in wet storage conditions. For example, the powder concentrates of IPBC are advantageous for protecting against microbial growth in applications such as paints, building materials, stucco, concrete, caulks, sealants, joint compounds, adhesives, leather, wood, inks, pigment dispersions, metal working fluids, drilling mud and/or clay slurries, latexes, coatings, mineral slurries, cosmetics, household or personal care formulations, pulp and paper mill samples, wood, leather, and industrial water treatment.

The term "storage-stable" used in connection with the present invention refers to the stability of IPBC at high processing temperature (approx. 80° C); stability in alkaline processing conditions; and in wet storage conditions.

The term "iodopropynyl group" used in connection with the present invention refers to an iodopropynyl group preferably selected from iodopropynyl butyl carbamate (IPBC), 3-iodopropynyl carbamate and 3-iodopropynyl-N-phenyl carbamate. In a preferred embodiment, the biocide is IPBC.

The term "free flowing powder concentrate" used in connection with the present invention refers to powder formulation of IPBC which is stable with regard to agglomeration and crystallization at room temperature and which has free flowability.

More specifically, the present invention provides a biocide formulation comprising a biocide containing an iodopropynyl group and an inert filler, wherein the wt % ratio of biocide: inert filler is from about 1:1 to about 1:100 and the wt % of biocide is not more than 50%. The inert filler can be present in an amount of 35-99, preferably 40-90 and most preferably 45-85 percent by weight of the total concentrate composition.

The amount of biocide in the powder concentrate is in the range of about 1 to about 50 wt.% of the total composition; and more preferably is in the range of about 10 to 25 wt.%.

The calcium carbonate preferably is present in an amount of 35-75, more preferably 40-70 percent by weight of the composition.

The inert filler is a combination of calcium carbonate and silica present in a wt.% ratio of from about 3:2 to about 15:1.

In a particularly preferred embodiment, the concentrate features 20-25 % IPBC, 60-70% calcium carbonate and 5-15% silica.

In one embodiment of the present invention, the maximum particle size of the finely divided particles of biocide and the inert carrier is ≤250 µm; and more preferably it is ≤200 µm.

The free flowing powder concentrate in a preferred embodiment is formulated in the form of a tablet, powder, flake, particle, or sachet.

In another embodiment, the present invention provides powder concentrates having processing stability at high temperature and alkaline conditions, and exhibiting stability in wet storage conditions. The mixture is free flowing and does not cause feeding problems, and remains free flowing after packaging and storage.

The storage stable free flowing powder concentrate can be employed in the field of paints, building materials, stucco, concrete, caulks, sealants, joint compounds, adhesives, leather, wood, inks, pigment dispersions, metal working fluids, drilling mud and/or clay slurries, latexes, coatings, mineral slurries, cosmetics, household or personal care formulations, pulp and paper mill samples, wood, leather, and industrial water treatment.

The concentrates described herein can be prepared by mixing the individual components using techniques known in the art.

The following examples further illustrate the invention. They are presented to illustrate specific embodiments of the present compositions and methods.

**Examples: Concentrates of the present invention:**

| **Ingredient** | Example 1* | **Example 2** | Example 3* | **Example 4** |
|---|---|---|---|---|
| IPBC | 24 | 12 | 40 | 24 |
| Calcium carbonate | 66 | - | 45 | |
| Kaolin | -- | 80 | - | - |
| Gypsum | - | - | - | 66 |
| Silica | 10 | 8 | 15 | 10 |

| | | | | |
|---|---|---|---|---|
| * Examples according to the present invention | | | | |

These concentrates formed free flowing powders, free of agglomerates and clumps, and exhibited processing stability at high temperatures and alkaline conditions.

## Claims

1. A storage stable free flowing powder concentrate for the manufacture of a biocide formulation, said concentrate comprising a biocide containing an iodopropynyl group and an inert filler, wherein the wt. % ratio of biocide: inert filler is from 1 :1 to 1 : 100 and the wt. % of biocide is not more than 50%; wherein said inert filler is a combination of calcium carbonate and silica in a wt. % ratio of from 3:2 to 15:1.

2. The free flowing powder concentrate according to claim 1 , wherein the biocide containing an iodopropynyl group is selected from iodopropynyl butyl carbamate (IPBC), 3-iodopropynyl carbamate and 3-iodopropynyl-N-phenyl carbamate.

3. The free flowing powder concentrate according to claim 2, wherein said biocide is IPBC.

4. The free flowing powder concentrate according to claim 1, wherein the maximum particle size of finely divided particles of biocide and the inert carrier is ≤ 250 µm.

5. The free flowing powder concentrate according to claim 1, wherein the amount of biocide is in the range of about 1 to about 50 wt% of the total composition.

6. The free flowing powder concentrate according to claim 1 , wherein the amount of inert filler is in the range of about 35 to about 99 wt%.

7. A tablet, powder, flake, particle, or sachet formulated from the free flowing powder concentrate according to claim 1.

8. Paint, building materials, stucco, concrete, caulks, sealants, joint compounds, adhesives, leather, wood, inks, pigment dispersions, metal working fluids, drilling mud and/or clay slurries, latexes, coatings, mineral slurries, cosmetics, household or personal care formulations, pulp and paper mill samples, wood, leather, and industrial water treatment comprising the free flowing powder concentrate according to claim 1.

## Patentansprüche

1. Ein lagerstabiles, rieselfähiges Pulverkonzentrat zur Herstellung einer Biozidformulierung, wobei das Konzentrat ein Biozid, das eine lodpropinylgruppe enthält, und einen inerten Füllstoff umfasst, wobei das Verhältnis der Gewichtsprozentangaben von Biozid : inertem Füllstoff von 1 : 1 bis 1 : 100 ist und die Gewichtsprozentangabe des Biozids nicht mehr als 50% ist; wobei der inerte Füllstoff eine Kombination von Calciumcarbonat und Siliciumdioxid in einem Verhältnis der Gewichtsprozentangaben von ab 3:2 bis 15:1 ist.

2. Das rieselfähige Pulverkonzentrat gemäß Anspruch 1, wobei das Biozid, das eine lodpropinylgruppe enthält, ausgewählt wird aus der Gruppe aus lodpropinylbutylcarbamat (IPBC), 3-lodpropinylcarbamat und 3-lodpropinyl-N-phenylcarbamat.

3. Das rieselfähige Pulverkonzentrat gemäß Anspruch 2, wobei das Biozid IPBC ist.

4. Das rieselfähige Pulverkonzentrat gemäß Anspruch 1, wobei die maximale Teilchengröße der fein verteilten Teilchen des Biozids und des Füllstoffträgermaterials ≤ 250 µm ist.

5. Das rieselfähige Pulverkonzentrat gemäß Anspruch 1, wobei die Menge des Biozids im Bereich von ungefähr 1 bis ungefähr 50 Gew.-% der gesamten Zusammensetzung liegt.

6. Das rieselfähige Pulverkonzentrat gemäß Anspruch 1, wobei die Menge des inerten Füllstoffs im Bereich von ungefähr 35 bis ungefähr 99 Gew.-% liegt.

7. Eine Tablette, ein Pulver, ein Blättchen, ein Teilchen oder ein Beutel, der aus dem rieselfähigen Pulverkonzentrat gemäß Anspruch 1 hergestellt wurde.

8. Anstrichmaterial, Baustoffe, Stuck, Beton, Abdichtmaterialien, Verfugungsstoffe, Fugenmaterialien, Klebstoffe, Leder, Holz, Färbemittel, Pigmentdispersionen, Metallbearbeitungsflüssigkeiten, Bohrspülungen und/oder Tonschlämme, Latizes, Lacke, Mineralschlämme, Kosmetika, Haushalts- oder Körperpflegeformulierungen, Zellstoff- und Papierfabrikmuster, Holz-, Leder- und Industriewasserbehandlungsmittel, umfassend das rieselfähige Pulverkonzentrat gemäß Anspruch 1.

## Revendications

1. Concentré sous forme pulvérulente fluide stable au stockage pour la fabrication d'une formulation biocide, ledit concentré comprenant un biocide contenant un groupe iodopropynyle et une charge inerte, le rapport en % en poids biocide:charge inerte étant de 1:1 à 1:100 et la proportion en % en poids de biocide n'étant pas supérieure à 50 % ; ladite charge inerte étant une combinaison de carbonate de calcium et de silice selon un rapport en % en poids de 3:2 à 15:1.

2. Concentré sous forme pulvérulente fluide selon la revendication 1, dans lequel le biocide contenant un groupe iodopropynyle est sélectionné parmi le butylcarbamate d'iodopropynyle (IPBC), le carbamate de 3-iodopropynyle et le carbamate de 3-iodopropynyl-N-phényle.

3. Concentré sous forme pulvérulente fluide selon la revendication 2, dans lequel ledit biocide est l'IPBC.

4. Concentré sous forme pulvérulente fluide selon la revendication 1, dans lequel la taille de particule maximale de particules finement divisées de biocide et du support inerte est ≤ 250 µm.

5. Concentré sous forme pulvérulente fluide selon la revendication 1, dans lequel la teneur en biocide est située dans la plage d'environ 1 à environ 50 % en poids de la composition totale.

6. Concentré sous forme pulvérulente fluide selon la revendication 1, dans lequel la teneur en charge inerte est située dans la plage d'environ 35 à environ 99 % en poids.

7. Comprimé, poudre, flocon, particule ou sachet formulé à partir du concentré sous forme pulvérulente fluide selon la revendication 1.

8. Peinture, matériaux de construction, stuc, béton, matériaux d'étanchéité, produits de scellement, pâtes à joint, adhésifs, cuir, bois, encres, pigments en dispersion, fluides de travail des métaux, suspensions de boue et/ou d'argile de forage, latex, revêtements, suspensions minérales, produits cosmétiques, formulations ménagères ou d'hygiène corporelle, échantillons de pâte à papier et de papeterie, bois, cuir, et traitement des eaux usées comprenant le concentré sous forme pulvérulente fluide selon la revendication 1.
